(19) Europäisches Patentamt
European Patent Office
Office européen des brevets

(11) **EP 4 079 771 A1**

(12) **EUROPEAN PATENT APPLICATION**
published in accordance with Art. 153(4) EPC

(43) Date of publication:
**26.10.2022 Bulletin 2022/43**

(21) Application number: **20901221.0**

(22) Date of filing: **18.12.2020**

(51) International Patent Classification (IPC):
*C08F 20/56* (2006.01)    *C08K 7/06* (2006.01)
*C08L 101/00* (2006.01)    *C08F 2/44* (2006.01)
*C08J 5/18* (2006.01)

(52) Cooperative Patent Classification (CPC):
**C08F 2/44; C08F 20/56; C08J 5/18; C08K 7/06; C08L 101/00**

(86) International application number:
**PCT/JP2020/047503**

(87) International publication number:
**WO 2021/125339 (24.06.2021 Gazette 2021/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.12.2019 JP 2019230499**

(71) Applicant: **Showa Denko K.K.**
**Tokyo 105-8518 (JP)**

(72) Inventors:
• **MIYAMURA Yasunao**
  **Tokyo 105-8518 (JP)**
• **KADOWAKI Yasushi**
  **Tokyo 105-8518 (JP)**
• **YAMATAKE Kuniaki**
  **Tokyo 105-8518 (JP)**
• **HARA Masanao**
  **Tokyo 105-8518 (JP)**
• **YAMAKI Shigeru**
  **Tokyo 105-8518 (JP)**
• **OHATA Hideki**
  **Tokyo 105-8518 (JP)**

(74) Representative: **Strehl Schübel-Hopf & Partner**
**Maximilianstrasse 54**
**80538 München (DE)**

(54) **HIGH MOLECULAR WEIGHT POLYMER SHEET AND METHOD FOR PRODUCING SAME**

(57) In a method for producing a high-molecular-weight polymer sheet, when a monomer composition including silver nanowires is polymerized, the monomer composition is allowed to stand in a state in which a thickness direction of the obtained high-molecular-weight polymer sheet before the polymerization is a vertical direction, and the silver nanowires in the monomer composition are oriented in the vertical direction and polymerized.

EP 4 079 771 A1

## Description

[Technical Field]

The present invention relates to a high-molecular-weight polymer sheet and a method for producing the same.
Priority is claimed on Japanese Patent Application No. 2019-230499, filed December 20, 2019, the content of which is incorporated herein by reference.

[Background Art]

Silver nanowires are kneaded and dispersed in a material such as a resin or a gel, and are used for optical films such as transparent touch panels, for example. One of the properties that determine the physical properties of the materials is the orientation of silver nanowires. Specific examples of the physical properties include physical properties such as mechanical strength, elongation strength, optical anisotropy, birefringence, conductive anisotropy, and electrothermal anisotropy.
In Non-Patent Document 1, an oriented nanowire film is produced by controlling a spraying direction on a substrate provided with unevenness.
Further, in Non-Patent Document 2, an oriented nanowire film is produced by using orientation due to a shear stress during bar coating.

[Citation List]

[Patent Document]

[Patent Document 1]
Japanese Unexamined Patent Application, First Publication No. 2019-168386

[Non-Patent Documents]

[Non-Patent Document 1]
Probst, P. T. et al. ACS Applied Materials & Interfaces 10, 2018, 3046-3057
[Non-Patent Document 2]
Byoungchoo Park et al. Scientific Reports volume 6, 2016, Article number: 19485

[Summary of Invention]

[Technical Problem]

In both the methods of Non-Patent Document 1 and Non-Patent Document 2, the orientation of nanowires is a substantially in-plane direction, and the orientation direction is restricted.
In view of the above circumstances, a first aspect and a second aspect of the present invention is to provide a high-molecular-weight polymer sheet in which silver nanowires are oriented in a thickness direction and a method for producing the same.

[Solution to Problem]

That is, the first aspect of the present invention has the following configuration.

[1] A high-molecular-weight polymer sheet having a thickness direction in a predetermined direction is a high-molecular-weight polymer sheet including silver nanowires, in which the silver nanowires are oriented in the thickness direction.
The first aspect of the present invention preferably includes the following characteristics [2] and [3]. Preferably, two of these characteristics can be combined.
[2] The high-molecular-weight polymer sheet including silver nanowires according to [1], in which an S value of a degree of orientation in the thickness direction of the silver nanowires, determined from a scattering vector of small-angle X-ray scattering is 0.1 to 1.0, and

the S value is determined by the following Equation (1):

$$S = \frac{3C - 1}{2} \qquad \cdots (1)$$

where C in Equation (1) satisfies Equation (2), and I($\theta$) in Equation (2) is a scattering intensity at an azimuth $\theta$ on a circle whose radius is a scattering vector at which scattering of the silver nanowires determined by a scattering pattern of the small-angle X-ray scattering becomes a maximum value.

$$C = \frac{\int_0^{\frac{\pi}{2}} I(\theta) \cos^2 \theta \sin\theta d\theta}{\int_0^{\frac{\pi}{2}} I(\theta) \sin\theta d\theta} \qquad \cdots (2)$$

[3] The high-molecular-weight polymer sheet according to [1] or [2], in which the thickness direction is a direction perpendicular to a surface having a largest area among surfaces of the high-molecular-weight polymer sheet.

The second aspect of the present invention is the following method for producing a high-molecular-weight polymer sheet.

[4] A method for producing a high-molecular-weight polymer sheet, including: a preparation step of preparing a monomer composition including silver nanowires; a standing step of allowing the monomer composition to stand horizontally and orienting the nanowires in a vertical direction; and a polymerization step of polymerizing the monomer composition in a state in which the silver nanowires in the monomer composition are oriented in the vertical direction. The second aspect of the present invention preferably includes the following characteristics [5] and [6]. Preferably, two of these characteristics can be combined.

[5] The method for producing a high-molecular-weight polymer sheet according to [4], in which in the polymerization step, the monomer composition is irradiated with ultraviolet rays.

[6] The method for producing a high-molecular-weight polymer sheet according to [4] or [5], further including a preliminary step of measuring an S value of the high-molecular-weight polymer sheet obtained in the polymerization step and adjusting the following cycle conditions. In the preliminary step, if the S value is smaller than a desired S value, the condition is adjusted so that the S value is increased, and in a method for performing the preparation step, the standing step, and the polymerization step again, the S value is determined by the following Equation (1):

$$S = \frac{3C - 1}{2} \qquad \cdots (1)$$

where C in Equation (1) satisfies Equation (2), and I($\theta$) in Equation (2) is a scattering intensity at an azimuth $\theta$ on a circle whose radius is a scattering vector at which scattering of the silver nanowires determined by a scattering pattern of the small-angle X-ray scattering becomes a maximum value.

$$C = \frac{\int_0^{\frac{\pi}{2}} I(\theta) \cos^2 \theta \sin\theta d\theta}{\int_0^{\frac{\pi}{2}} I(\theta) \sin\theta d\theta} \qquad \cdots (2)$$

[Advantageous Effects of Invention]

A high-molecular-weight polymer sheet in which silver nanowires are oriented in a thickness direction can be obtained.

[Description of Embodiments]

Hereinafter, an example of an embodiment of the present invention will be described, but the present invention can be appropriately modified and carried out without changing the gist thereof.

The present embodiment will be specifically described in order to better understand the gist of the invention, and is not limited to the present invention unless otherwise specified. It is possible to change, add, omit, replace, and the like the position, angle, number, material, quantity, composition, and the like without deviating from the gist of the present invention.

(High-molecular-weight Polymer Sheet)

A high-molecular-weight polymer sheet in the present embodiment has a predetermined thickness direction. The thickness direction is, for example, a direction perpendicular to a surface having the largest area among surfaces of the high-molecular-weight polymer sheet. For example, when the high-molecular-weight polymer sheet is a hexahedron, the thickness direction is a direction parallel to a side having the shortest length among the sides constituting the hexahedron, and when the high-molecular-weight polymer sheet is a cylinder, the thickness direction is a direction perpendicular to a circle. The high-molecular-weight polymer sheet in the present embodiment includes silver nanowires. The silver nanowires are oriented in the thickness direction of the high-molecular-weight polymer sheet. In the present invention, the "sheet" includes a film and a plate. In addition, the type of high-molecular-weight polymer of the high-molecular-weight polymer sheet is not particularly limited, and may be a resin or a gel. A monomer composition used for producing the high-molecular-weight polymer sheet of the present embodiment may be any composition obtained by polymerizing to obtain a high-molecular-weight polymer.

The degree of orientation of the silver nanowire in the thickness direction is obtained by an S value. The S value is determined by a small-angle X-ray scattering measurement method described in Patent Document 1. That is, the S value is determined by the following Equation (1). When the degree of orientation is isotropic, the S value is 0, and when the degree of orientation is totally oriented, the S value is 1:

$$S = \frac{3C - 1}{2} \quad \cdots (1)$$

where, C in Equation (1) satisfies Equation (2), and $I(\theta)$ in Equation (2) is a scattering intensity at an azimuth $\theta$ on a circle whose radius is a scattering vector at which scattering of the silver nanowires determined by a scattering pattern of the small-angle X-ray scattering becomes a maximum value.

$$C = \frac{\int_0^{\frac{\pi}{2}} I(\theta) \cos^2\theta \sin\theta d\theta}{\int_0^{\frac{\pi}{2}} I(\theta) \sin\theta d\theta} \quad \cdots (2)$$

More specifically, the S value is determined by a method described in Examples to be described below.

The S value of the high-molecular-weight polymer sheet is preferably 0.1 to 1.0.

When the high-molecular-weight polymer sheet is used as a conductive material, the higher the degree of orientation, the higher the anisotropy. On the other hand, higher conductivity is obtained when the degree of orientation is low and the silver nanowires are entangled with each other. Therefore, the S value of the high-molecular-weight polymer sheet used for the conductive material is preferably 0.1 to 0.5, and more preferably 0.2 to 0.3.

When the high-molecular-weight polymer sheet is used as an optical material, the higher the degree of orientation, the higher the optical characteristics of polarized light and the like. Therefore, the S value is preferably 0.2 to 1.0, and more preferably 0.4 to 1.0.

(Method for Producing High-molecular-weight Polymer Sheet)

Such a high-molecular-weight polymer sheet is obtained by polymerizing a monomer composition including silver nanowires using a property of orientation in a gravity direction (vertical direction) in a liquid such as water or an organic solvent. That is, in a preparation step of preparing a monomer composition including the silver nanowires and before the polymerization, the monomer composition is allowed to stand in a state in which the thickness direction of the obtained high-molecular-weight polymer sheet is the vertical direction, and the silver nanowires in the monomer composition are oriented in the vertical direction and polymerized.

An example of a specific method of the high-molecular-weight polymer sheet will be described below. The method for producing a high-molecular-weight polymer sheet according to the present embodiment includes, for example, a preparation step, a standing step, and a polymerization step.

(Preparation Step)

In the preparation step, a monomer composition including silver nanowires is prepared.

As the monomer composition, for example, a monomer composition including N,N'-dimethylacrylamide, N,N'-methylenebisacrylamide, 2,2-diethoxyacetophenone, and the silver nanowires is used. The monomer composition is added dropwise into, for example, a quartz cell having a predetermined thickness direction.

(Standing Step)

Next, the standing step is performed. In the standing step, the monomer composition is allowed to stand horizontally and the silver nanowires are oriented in the vertical direction. In the standing step, for example, the quartz cell having the monomer composition including the silver nanowires is allowed to stand in a state in which the thickness direction and the vertical direction of the quartz cell are made to coincide with each other. The standing step may be performed for, for example, 5 minutes or longer.

(Polymerization Step)

Next, a polymerization step is performed. In the polymerization step, the monomer composition is polymerized in a state in which the silver nanowires in the monomer composition are oriented in the vertical direction. The polymerization step is performed by, for example, photopolymerization in which the monomer composition including the silver nanowires is irradiated with light such as ultraviolet rays.

In order to obtain a higher degree of orientation, that is, a higher S value, the standing time may be lengthened in the standing step, a viscosity of the monomer composition may be lowered in the preparation step, or silver nanowires with less fracture or breakage may be used. When the S value is lower, the opposite thereof may be performed. That is, the standing time may be shortened in the standing step, the viscosity of the monomer composition may be increased in the preparation step, or silver nanowires with many fractures or breakages may be used.

The method for producing a high-molecular-weight polymer sheet according to the present embodiment may include a preliminary step of performing a preliminary experiment based on the conditions, in order to obtain a high-molecular-weight polymer sheet having a desired degree of orientation. In the preliminary step, the S value of the obtained high-molecular-weight polymer sheet is measured, and the following cycle conditions are adjusted. In the method for producing a high-molecular-weight polymer sheet including the preliminary step, the preparation step, the standing step, and the polymerization step are sequentially performed (first cycle), the preliminary step is performed, and then the preparation step, the standing step, and the polymerization step are performed again (second cycle). The method for producing a high-molecular-weight polymer sheet including a preliminary step has the above-mentioned steps at least once.

In the preliminary step, the S value of the high-molecular-weight polymer sheet obtained in the first cycle is compared with the desired S value, and each condition in the second cycle is adjusted. Specifically, when the S value of the high-molecular-weight polymer sheet obtained in the first cycle is smaller than the desired S value, the S value is adjusted so that the standing time in the standing step is lengthened, the viscosity of the monomer composition prepared in the preparation step is low, or the silver nanowires with less fracture or breakage are used. When the S value of the high-molecular-weight polymer sheet obtained in the first cycle is larger than the desired S value, the standing time in the standing step is shortened, the viscosity of the monomer composition prepared in the preparation step is increased, or the silver nanowires with many fractures or breakages are adjusted.

Silver nanowires that have undergone an ultrasonic treatment step or a step of applying a shear stress by stirring, kneading, flowing, and the like in a high-concentration and high-viscosity state have more fractures and breakages than silver nanowires that have not undergone such a step.

By performing such a preliminary step, each of the above conditions can be determined, and a high-molecular-weight polymer sheet having a desired degree of orientation can be obtained.

It is easier to obtain a stable S value by waiting for a time at which the silver nanowires are sufficiently oriented and performing polymerization, rather than starting polymerization while the silver nanowires are oriented in the monomer composition. For example, the standing step may be performed for 20 minutes or longer. The S value is preferably adjusted by selecting the type of the silver nanowires.

The time at which the silver nanowires are sufficiently oriented is shorter when the viscosity of the monomer composition is low, and is longer when the viscosity of the monomer composition is high. If the viscosity of the monomer composition is the same as that of a general organic solvent or water, a standard of time at which the silver nanowires are sufficiently oriented is about 5 minutes to 1 hour or 10 minutes to 1 hour.

[Examples]

Hereinafter, the present invention will be described in more detail with reference to Examples, but the present invention is not limited to the following Examples.

(Example 1)

In Example 1, a high-molecular-weight polymer sheet was prepared as follows.

0.1% by mass of an aqueous dispersion of silver nanowires (average diameter: 28 nm) including 8% by mass of N,N'-dimethylacrylamide, 0.1% by mass of N,N'-methylenebisacrylamide, and 0.1% by mass of 2,2-diethoxyacetophenone as a monomer composition were added dropwise to a quartz cell having a horizontal bottom surface (10 mm x 30 mm) to a depth of 5 mm, and allowed to stand for 5 minutes.

Next, polymerization was performed by irradiating the monomer composition in the quartz cell with ultraviolet rays for 20 minutes using a 250W UV lamp (LI0852 manufactured by Hamamatsu Photonics K.K.) to obtain a gel (high-molecular-weight polymer sheet).

(Examples 2 to 4)

A high-molecular-weight polymer sheet was prepared in the same manner as in Example 1, except that the standing time was 10 minutes (Example 2), 20 minutes (Example 3), and 40 minutes (Example 4).

(Measurement of Degree of Orientation)

A section obtained by cutting the high-molecular-weight polymer sheets of Examples 1 to 4 in the thickness direction so as to have a width of 1 mm was used as a sample. The sample was placed on the sample holder so that a cut surface was perpendicular to an X-ray beam direction, and a small-angle X-ray scattering measurement was performed. Here, measurement conditions were set as a camera length of 2.3 m, an X-ray wavelength of 0.1 nm, an X-ray beam diameter of 0.1 mm, a detector of Pilatus, and a measurement range of a scattering vector of 0.1 nm$^{-1}$ to 4 nm$^{-1}$.

Further, in order to observe whether or not the orientation in the in-plane direction existed as a comparison, small-angle X-ray scattering measurement was performed by irradiation in the thickness direction parallel with an X-ray beam.

Azimuth distribution of a scattering intensity in the scattering vector (0.3 nm$^{-1}$ in the silver nanowires used this time) near the maximum value of the scattering of the sample was determined from the measured scattering pattern of the small-angle X-ray scattering, and an S value of Equation (2) described above was calculated by defining an angle at which the intensity had the maximum value as 0°. Background correction was not performed, and each S value was calculated based on the obtained direct scattering intensity.

In the high-molecular-weight polymer sheet obtained in Example 1, the silver nanowires were oriented in the thickness direction thereof, and the S value was 0.18. On the other hand, there was no orientation in the in-plane direction, and the S value was 0.

In any of the high-molecular-weight polymer sheets obtained in Examples 2 to 4, the silver nanowires were oriented in the thickness direction thereof, and the S value was 0.22 (Example 2), 0.24 (Example 3), and 0.24 (Example 4). All of the S values of the silver nanowires in the in-plane direction were 0. It was thus found that when the standing step was performed for 20 minutes or longer, the silver nanowires were easily oriented, and a high S value was easily obtained. It was also found that there was no orientation in the in-plane direction.

[Industrial Applicability]

The high-molecular-weight polymer obtained by the method of the present invention can be used as an optical material such as a polarizing filter or an electronic material such as an anisotropic conductive film.

**Claims**

1. A high-molecular-weight polymer sheet, comprising:

   silver nanowires,
   wherein the silver nanowires are oriented in a thickness direction.

2. The high-molecular-weight polymer sheet according to Claim 1,

   wherein an S value determined from a scattering vector of small-angle X-ray scattering and indicating a degree of orientation in the thickness direction of the silver nanowires is 0.1 to 1.0, and
   the S value is determined by the following Equation (1):

$$S = \frac{3C - 1}{2} \quad \cdots (1)$$

   where C in Equation (1) satisfies Equation (2), and $I(\theta)$ in Equation (2) is a scattering intensity at an azimuth $\theta$ on a circle whose radius is a scattering vector at which scattering of the silver nanowires determined by a scattering pattern of the small-angle X-ray scattering becomes a maximum value.

$$C = \frac{\int_0^{\frac{\pi}{2}} I(\theta) \cos^2 \theta \, \sin\theta \mathrm{d}\theta}{\int_0^{\frac{\pi}{2}} I(\theta) \sin\theta \mathrm{d}\theta} \quad \cdots (2)$$

3. The high-molecular-weight polymer sheet according to Claim 1 or 2, wherein the thickness direction is a direction perpendicular to a surface having a largest area among surfaces of the high-molecular-weight polymer sheet.

4. A method for producing a high-molecular-weight polymer sheet, comprising:

   a preparation step of preparing a monomer composition including silver nanowires;
   a standing step of allowing the monomer composition to stand horizontally and orienting the silver nanowires in a vertical direction; and
   a polymerization step of polymerizing the monomer composition in a state in which the silver nanowires in the monomer composition are oriented in the vertical direction.

## INTERNATIONAL SEARCH REPORT

| International application No. |
| --- |
| PCT/JP2020/047503 |

A. CLASSIFICATION OF SUBJECT MATTER
C08F 20/56(2006.01)i; C08K 7/06(2006.01)i; C08L 101/00(2006.01)i; C08F
2/44(2006.01)i; C08J 5/18(2006.01)i
FI: C08L101/00; C08F2/44 A; C08K7/06; C08F20/56; C08J5/18 CEY
According to International Patent Classification (IPC) or to both national classification and IPC

B. FIELDS SEARCHED

Minimum documentation searched (classification system followed by classification symbols)
C08F20/56; C08K7/06; C08L101/00; C08F2/44; C08J5/18

Documentation searched other than minimum documentation to the extent that such documents are included in the fields searched
|  |  |
| --- | --- |
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>A | JP 2011-70821 A (PANASONIC ELECTRIC WORKS CO., LTD.) 07 April 2011 (2011-04-07) claims, examples, drawings | 1–3<br>4 |
| X<br>A | CN 104919543 A (KOREA RESEARCH INSTITUTE OF STANDARDS AND SCIENCE) 16 September 2015 (2015-09-16) claims, examples, drawings | 1–3<br>4 |
| A | US 2014/0374268 A1 (AGENCY FOR SCIENCE, TECHNOLOGY AND RESEARCH) 25 December 2014 (2014-12-25) entire text | 1–4 |
| A | US 2013/0090405 A1 (YALE UNIVERSITY) 11 April 2013 (2013-04-11) entire text | 1–4 |

☐ Further documents are listed in the continuation of Box C.　　☒ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 16 February 2021 (16.02.2021) | 22 February 2021 (22.02.2021) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
| --- | --- |

Form PCT/ISA/210 (second sheet) (January 2015)

International application No.

PCT/JP2020/047503

| Patent Documents referred in the Report | Publication Date | Patent Family | Publication Date |
|---|---|---|---|
| JP 2011-70821 A | 07 Apr. 2011 | (Family: none) | |
| CN 104919543 A | 16 Sep. 2015 | US 2015/0318071 A1 claims, examples, drawings WO 2014/084562 A1 KR 10-1341102 B1 | |
| US 2014/0374268 A1 | 25 Dec. 2014 | (Family: none) | |
| US 2013/0090405 A1 | 11 Apr. 2013 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019230499 A

- JP 2019168386 A

**Non-patent literature cited in the description**

- **PROBST, P. T. et al.** *ACS Applied Materials & Interfaces,* 2018, vol. 10, 3046-3057

- **BYOUNGCHOO PARK et al.** *Scientific Reports,* 2016, vol. 6 (19485